# EUROPÄISCHE PATENTSCHRIFT

(11) **EP 0 451 366 B1**
(45) Veröffentlichungstag und Bekanntmachung des Hinweises auf die Patenterteilung: **05.04.1995**
(21) Anmeldenummer: 90125345.0
(22) Anmeldetag: 22.12.1990
(51) Int. Cl.: F04C 15/04

(54) **Sauganschlussverbindung für eine Hydropumpe**
Suction line connection for a liquid pump
Connexion d'aspiration pour une pompe à liquide

(30) Priorität: 11.04.1990 DE 4011668
(43) Veröffentlichungstag der Anmeldung: 16.10.1991
(73) Patentinhaber: ROBERT BOSCH GMBH, 70442 Stuttgart (DE)
(72) Erfinder: Wolff, Günter, Dipl.-Ing. (FH), W-7141 Schwieberdingen (DE)

(56) Entgegenhaltungen:
- FR-A- 1 527 398
- GB-A- 1 510 357
- GB-A- 2 013 512
- GB-A- 2 049 815
- US-A- 3 356 032
- US-A- 4 298 316

## Beschreibung

### Stand der Technik

Die Erfindung geht aus von einer Sauganschlußverbindung für eine selbstansaugende Hydropumpe, insbesondere Umlauf- oder Hubverdrängerpumpe für hydraulische Fahrzeugbremsanlagen, nach der Gattung des Hauptanpruchs.

Es ist schon eine solche Sauganschlußverbindung bekannt, bei welcher der am Gehäuse der Hydropumpe befestigte Saugschlauch mit einem an seinem Anschlußnippel angeordneten Stößel ein Rückschlagventil der Pumpe in Offenstellung hält, so daß diese durch den Saugschlauch aus einem Bremsflüssigkeitsvorratsbehälter Bremsflüssigkeit ansaugen kann. Bei vom Pumpengehäuse gelöstem Saugschlauch nimmt das Rückschlagventil dagegen seine Schließstellung ein. Die Pumpe kann durch den hierdurch geschlossenen Sauganschluß keine Luft ansaugen und in die Bremsanlage fördern. Das Eindringen von Luft in die Bremsanlage ist aus Sicherheitsgründen unzulässig.

Aus FR-A-1 527 398 ist eine Pumpe mit einem saugseitigen Anschlußstück für die Befestigung eines Schlauches oder Rohres bekannt. Das Anschlußstück ist in einen Gehäuseteil eingeschraubt und dient zum Niederhalten einer Feder sowie Zum Führen eines Strahlrohres in einer Kammer des Pumpengehäuses. Das Strahlrohr bildet ein druckabhängig betätigbares Sitzventil in einer Kanalverbindung zwischen der Druckseite und der Saugseite der Pumpe. Das Anschlußstück ist nicht dazu bestimmt, zum Lösen des Schlauches oder Rohres aus dem Pumpengehäuse entfernt zu werden. Auch ist nicht vorgesehen, hierbei das Strahlrohr aus der Kammer zu entfernen und die Verbindung zwischen der Druckseite und der Saugseite der Pumpe freizugeben.

### Vorteile der Erfindung

Die erfindungsgemäße Sauganschlußverbindung mit den kennzeichnenden Merkmalen des Hauptanspruchs hat demgegenüber den Vorteil, daß das Ansaugen von Luft bei fehlender Saugleitung ohne bewegte Bauteile der Pumpe sicher vermieden wird, weil der aus der Anschlußbohrung entfernte Saugschlauchnippel eine Kurzschlußverbindung zwischen der Druckseite und der Saugseite der Pumpe freigibt, aufgrund der ein Druckaufbau mit Förderung von Luft auf der Pumpendruckseite ausgeschlossen ist.

Durch die in den Unteransprüchen aufgeführten Maßnahmen sind vorteilhafte Weiterbildungen und Verbesserungen der im Hauptanspruch angegebenen Sauganschlußverbindung möglich.

Von Vorteil ist die im Anspruch 2 gekennzeichnete Maßnahme, weil die Verbindungsbohrung mit geringem Aufwand herstellbar ist, vorzugsweise in einem einzigen Bohrvorgang zusammen mit der Anschlußbohrung für die Druckleitung.

Die im Anspruch 3 angegebene Ausgestaltung hat den Vorteil, daß der Saugschlauchnippel mit dem Zapfen als Drehteil kostengünstig herstellbar ist.

Mit der im Anspruch 4 gekennzeichneten Weiterbildung wird eine sichere Trennung der Saugseite und der Druckseite der Pumpe erzielt.

Die im Anspruch 5 offenbarte Ausgestaltung ist vorteilhaft, weil mit einfachen Mitteln eine Lagesicherung des Saugschlauchnippels und ein Ableiten von auf den Nippel wirkenden hydraulischen Druckkräften sowie am Saugschlauch angreifenden Zugkräften erzielt wird.

Mit der im Anspruch 6 angegebenen Anordnung wird einerseits eine verbesserte Entlüftung der Pumpe erzielt und andererseits ein Flüssigkeitsverlust beim Entfernen des Saugschlauches aus der Pumpe vermieden.

Mit der im Anspruch 7 gekennzeichneten Ausgestaltung wird ein im Zusammenhang mit der Herstellung des Saugschlauchnippels erzeugbares, in diesem integriertes Druckbegrenzungsventil erzielt, was im Gegensatz zur sonst üblichen Anordnung eines solchen Ventiles im Pumpengehäuse kostengünstig hinsichtlich der Erzeugung, Montage und Prüfung ist.

### Zeichnung

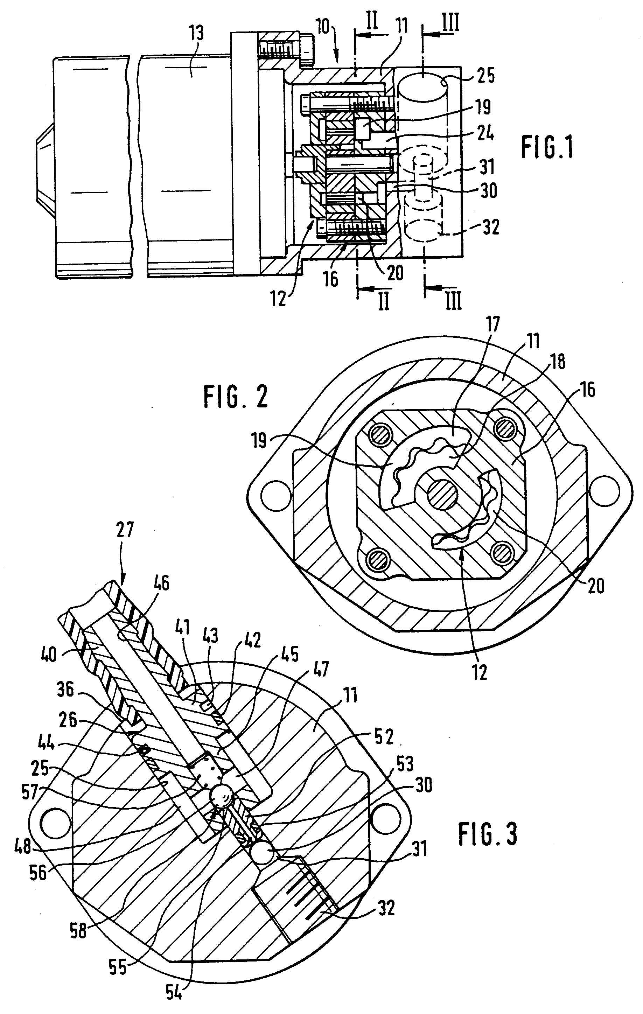

Ein Ausführungsbeispiel der Erfindung ist in der Zeichnung vereinfacht dargestellt und in der nachfolgenden Beschreibung näher erläutert. Es zeigen Figur 1 eine Ansicht einer selbstansaugenden Hydropumpe mit einem teilweise aufgebrochen gezeichneten Pumpengehäuse, Figur 2 einen Querschnitt durch das Pumpengehäuse entlang der Linie II-II in Figur 1 in anderem Maßstab mit Darstellung des Saugraumes sowie des Druckraumes der Pumpe und Figur 3 einen Schnitt durch das Pumpengehäuseteil entlang der Linie III-III in Figur 1 ebenfalls in anderem Maßstab mit einem im Pumpengehäuse aufgenommenen Saugschlauchnippel, welcher mit einem Zapfen eine Verbindungsbohrung zwischen dem Saugraum und dem Druckraum der Pumpe sperrt.

### Beschreibung des Ausführungsbeispiels

Die in Figur 1 dargestellte selbstansaugende Hydropumpe 10 besitzt ein Pumpengehäuse 11, in dem eine Zahnradpumpe 12 mit Innenverzahnung angeordnet ist. Die zur Gattung der Umlaufverdrängerpumpen gehörende Zahnradpumpe 12 ist durch einen am Pumpengehäuse 11 angeflanschten elektrischen Antriebsmotor 13 antreibbar.

Im Pumpengehäuse 11 ist ein Innengehäuse 16 der Zahnradpumpe 12 angeordnet, in dem ein verzahnter Außenläufer 17 und ein verzahnter Innenläufer 18 aufgenommen sind. Das Innengehäuse 16 schließt einen nierenförmigen Saugraum 19 und einen nierenförmigen Druckraum 20 der Zahnradpumpe 12 ein (Figur 2). Vom Saugraum 19 der Zahnradpumpe 12 führt eine Saugbohrung 24 zu einer Anschlußbohrung 25 des Pumpengehäuses 11 für die Aufnahme eines Saugschlauchnippels 26 einer Saugleitung 27 für die von der Hydropumpe 10 zu fördernde Betriebsflüssigkeit (Figur 3). Vom Druckraum 20 der Zahnradpumpe 12 führt dagegen eine Druckleitung 30 zu einer Verbindungsbohrung 31 im Pumpengehäuse 11. Die Verbindungsbohrung 31 dient als Kanal zwischen der Anschlußbohrung 25 für den Saugschlauchnippel 26 der Saugleitung und einer Anschlußbohrung 32 des Pumpengehäuses 11 für eine nicht dargestellte Druckleitung. Die Anschlußbohrung 25, die Verbindungsbohrung 31 sowie die Anschlußbohrung 32 verlaufen mit gleicher Längsachse. Sie können, abweichend vom dargestellten Ausführungsbeispiel, in einer am Pumpengehäuse 11 stirnseitig anliegenden Anschlußplatte angeordnet sein.

Die Anschlußbohrung 25 für den Saugschlauchnippel 26 ist umfangsseitig glatt ausgebildet und verläuft unter einem Winkel von etwa 60° zur Horizontalebene im wesentlichen oberhalb der Längsachse der Hydropumpe 10. Die Mündung 36 der Anschlußbohrung 25 liegt daher oberhalb des Saugraumes 19 und des Druckraumes 20 der Zahnradpumpe 12.

Die von der Anschlußbohrung 25 für den Saugschlauchnippel 26 bodenseitig ausgehende Verbindungsbohrung 31 hat einen kleineren Durchmesser als die Anschlußbohrung. Die Verbindungsbohrung 31 ist axial durch die unterhalb der Horizontalebene der Hydropumpe 10 liegende Anschlußbohrung 32 für die Druckleitung begrenzt. In den der Anschlußbohrung 32 für die Druckleitung zugeordneten Abschnitt der Verbindungsbohrung 31 mündet die vom Druckraum 20 der Zahnradpumpe 12 kommende Druckleitung 30 ein.

Der Saugschlauchnippel 26 besitzt angrenzend an seine Tülle 40 einen zylindrischen Abschnitt 41, welcher passend in der Anschlußbohrung 25 des Pumpengehäuses 11 sitzt. Der Abschnitt 41 des Saugschlauchnippels 26 ist mit einem umfangsseitig angeordneten Dichtungsring 42 gegen das Pumpengehäuse 11 abgedichtet. Im tüllenseitigen Bereich des Abschnitts 41 ist eine Ringnut 43 eingeformt, in welcher ein von der freien Stirnseite des Pumpengehäuses 11 her in dieses eingetriebener Federstift 44 eingreift. Dieser dient als Sicherungsstift gegen unbeabsichtigtes Herausziehen des Saugschlauchnippels 26 aus der Anschlußbohrung 25. Außerdem nimmt der Federstift 44 auf den Saugschlauchnippel 26 wirkende hydaulische Kräfte auf.

Der Saugschlauchnippel 26 ist in einen im Durchmesser abgesetzten Abschnitt 45 fortgesetzt. Die Tülle 40, der durchmessergrößere Abschnitt 41 und der durchmesserkleinere Abschnitt 45 des Saugschlauchnippels 26 sind von einer gleichachsig verlaufenden Längsbohrung 46 durchzogen. Diese ist im Abschnitt 45 des Saugschlauchnippels 26 von einer Querbohrung 47 gekreuzt, so daß eine flüssigkeitsleitende Verbindung vom Inneren der Saugleitung 27 in den vom Abschnitt 45 des Saugschlauchnippels 26 nicht völlig ausgefüllten Abschnitt 48 der Anschlußbohrung 25 besteht. In Figur 3 unter dem Abschnitt 45 des Saugschlauchnippels 26 liegend geht vom Abschnitt 48 der Anschlußbohrung 25 die in den Saugraum 19 der Zahnradpumpe 12 führende Saugbohrung 24 aus.

Der Saugschlauchnippel 26 hat einen gleichachsig verlaufenden zylindrischen Zapfen 52, welcher passend in die Verbindungsbohrung 31 bis zur Mündung der Druckleitung 30 greift. Im Zapfen 52 des Saugschlauchnippels 26 ist umfangsseitig ein Dichtungsring 53 zum dichten Abschluß der Verbindungsbohrung 31 aufgenommen. Der Zapfen 52 ist als separates Bauteil in die Längsbohrung 46 des Saugschlauchnippels 26 eingefügt und mit dessen Abschnitt 45 verschweißt. Der Zapfen 52 hat eine zur Längsbohrung 46 gleichachsig verlaufende, durchgehende Überströmbohrung 54, welche an ihrer der Querbohrung 47 nahen, saugraumseitigen Mündung einen Ventilsitz 55 für eine in der Längsbohrung 46 bewegbar angeordnete, als Ventilschließglied wirkende Kugel 56 bildet. Diese greift unter der Wirkung einer in der Längsbohrung 46 angeordneten, am Saugschlauchnippel 26 abgestützten Druckfeder 57 am Ventilsitz 55 an. Der Ventilsitz 55, die Kugel 56 und die Druckfeder 57 bilden ein zwischen der Druckseite und der Saugseite der Zahnradpumpe 12 angeordnetes Druckbegrenzungsventil 58. Wenn das Druckbegrenzungsventil als separate Baugruppe im Pumpengehäuse 11 angeordnet ist, kann, abweichend vom beschriebenen Ausführungsbeispiel, der Zapfen 52 ohne Bohrung ausgebildet und einstückig am Saugschlauchnippel 26 angeformt sein.

Betriebsflüssigkeit der Hydropumpe 10 wird durch die Saugleitung 27, die Längsbohrung 46 und die Querbohrung 47 des Saugschlauchnippels 26, den Abschnitt 48 der Anschlußbohrung 25 des Pumpengehäuses 11 sowie durch die von der Anschlußbohrung 25 abzweigende Saugbohrung 24 in den Saugraum 19 der Zahnradpumpe 12 gesaugt. Die vom Außenläufer 17 und vom Innenläufer 18 der Zahnradpumpe 12 geförderte Betriebsflüssigkeit fließt vom Druckraum 20 durch die Druckleitung 30 in den vom Zapfen 52 freien Teil der Verbindungsbohrung 31 zur Anschlußbohrung 32 und in die nicht dargestellte Druckleitung. Eine Verbindung von der Anschlußbohrung 25 durch die Überströmbohrung 54 des Zapfens 52 zur Anschlußbohrung 32 des Pumpengehäuses 11 ist durch das seine Schließstellung einnehmende Druckbegrenzungventil 58 versperrt. Lediglich bei unzulässig großem Druckanstieg auf der Druckseite der Zahnradpumpe 12 öffnet das Druckbegrenzungsventil 58, so daß Betriebsflüssigkeit durch die Überströmbohrung 54 in die Anschlußbohrung 25 und zur Saugseite der Zahnradpumpe abgesteuert wird.

Wenn es erforderlich ist, die Saugleitung 27 von der Hydropumpe 10 zu trennen, so gibt der aus der Anschlußbohrung 25 herausgezogene Saugschlauchnippel 26 mit Zapfen 52 die Verbindungsbohrung 31 zwischen der Anschlußbohrung 32 für die Druckleitung und der Anschlußbohrung 25 für den Saugschlauchnippel 26 frei. Wird bei fehlerhafterweise nicht remontierter Saugleitung 27 die Hydropumpe 10 in Gang gesetzt, so kann sich wegen des einen Kurzschluß zwischen der Druckseite und der Saugseite der Zahnradpumpe 12 darstellenden Kanals durch die Verbindungsbohrung 31 kein Druck im Druckraum 20 der Zahnradpumpe 12 aufbauen. Diese ist daher nicht in der Lage, Betriebsflüssigkeit zu fördern und damit Luft von der Saugseite her anzusaugen. Die Gefahr, daß Luft in die Druckleitung gefördert wird, ist daher ausgeschlossen.

Bei einer Verwendung der Hydropumpe 10 in einer hydraulischen Fahrzeugbremsanlage ist damit sichergestellt, daß bei fehlender Saugleitung und eingeschalteter Pumpe keine Luft in das Bremssystem gefördert wird.

In Abweichung vom geschriebenen Ausführungsbeispiel ist die Erfindung auch anwendbar bei sonstigen hydraulischen Umlauf- oder Hubverdrängerpumpen, soweit diese selbstansaugend sind.

## Patentansprüche

1. Selbstansaugende Hydropumpe (10), insbesondere Umlauf- oder Hubverdrängerpumpe für hydraulische Fahrzeugbremsanlagen, mit einer in einem Pumpengehäuse (11) angeordneten und mit dem Saugraum (19) der Pumpe in Verbindung stehenden Anschlußbohrung (25) zur dichten Aufnahme eines Saugschlauchnippels (26) einer Saugleitung (27) sowie mit einer durch einen Kanal (31) mit dem Druckraum (20) der Pumpe verbundenen Anschlußbohrung (32) des Pumpengehäuses für eine Druckleitung, dadurch gekennzeichnet, daß der auch von der Anschlußbohrung (25) für den Saugschlauchnippel (26) her mit dem Druckraum (20) der Pumpe (10) in Verbindung stehende Kanal (31) durch den in die Anschlußbohrung (25) eingeführten Saugschlauchnippel (26) dicht verschlossen ist.

2. Hydropumpe nach Anspruch 1, dadurch gekennzeichnet, daß der Kanal als gleichachsig zur Längsachse der Anschlußbohrung (25) für den Saugschlauchnippel (26) verlaufende und in die Anschlußbohrung (32) für die Druckleitung mündende Verbindungsbohrung (31) ausgebildet ist.

3. Hydropumpe nach Anspruch 2, dadurch gekennzeichnet, daß der Saugschlauchnippel (26) einen gleichachsig verlaufenden zylindrischen Zapfen (52) hat, welcher unter dichtem Anschluß in die Verbindungsbohrung (31) eingreift.

4. Hydropumpe nach Anspruch 3, dadurch gekennzeichnet, daß im Zapfen (52) des Saugschlauchnippels (26) umfangsseitig ein Dichtungsring (53) aufgenommen ist.

5. Hydropumpe nach Anspruch 1, dadurch gekennzeichnet, daß der Saugschlauchnippel (26) eine Ringnut (43) hat, in die ein in das Pumpengehäuse (11) eintreibbarer Sicherungsstift, wie Federstift (44) oder dergleichen, eingreift.

6. Hydropumpe nach Anspruch 1, dadurch gekennzeichnet, daß die Mündung (36) der Anschlußbohrung (25) für den Saugschlauchnippel (26) oberhalb des Saugraumes (19) und/oder des Druckraumes (20) der Pumpe (10) liegt.

7. Hydropumpe nach Anspruch 3, dadurch gekennzeichnet, daß der Saugschlauchnippel (26) eine Längsbohrung (46) hat, welche durch eine Querbohrung (47) mit dem Saugraum (19) der Pumpe (10) in Verbindung steht, daß die Längsbohrung (46) durch eine gleichachsig verlaufende, durchgehende Überströmbohrung (54) des Zapfens (52) mit dem Druckraum (20) verbunden ist und daß am saugraumseitigen Ende der Uberströmbohrung (54) ein federbelastetes Ventilschließglied (Kugel 56) angreift.

## Claims

1. Self-priming hydraulic pump (10), especially circulating or reciprocating positive-displacement pump for hydraulic vehicle-brake systems, with a connecting bore (25), arranged in a pump casing (11) and connected to the suction space (19) of the pump, for the sealing reception of a suction-hose nipple (26) of a suction conduit (27), and with a connecting bore (32) of the pump casing for a delivery conduit, the said connecting bore (32) being connected to the delivery space (20) of the pump by a channel (31), characterized in that the channel (31) also connected to the delivery space (20) of the pump (10) from the connecting bore (25) for the suction-hose nipple (26) is sealingly closed by the suction-hose nipple (26) introduced into the connecting bore (25).

2. Hydraulic pump according to Claim 1, characterized in that the channel is designed as a junction bore (31) extending coaxially to the longitudinal axis of the connecting bore (25) for the suction-hose nipple (26) and opening into the connecting bore (32) for the delivery conduit.

3. Hydraulic pump according to Claim 2, characterized in that the suction-hose nipple (26) has a cylindrical plug (52) which extends coaxially and which engages into the junction bore (31) so as to close it off sealingly.

4. Hydraulic pump according to Claim 3, characterized in that a sealing ring (53) is received circumferentially in the plug (52) of the suction-hose nipple (26).

5. Hydraulic pump according to Claim 1, characterized in that the suction-hose nipple (26) has an annular groove (43), into which engages a retaining pin, such as a spring pin (44) or the like, drivable into the pump casing (11).

6. Hydraulic pump according to Claim 1, characterized in that the mouth (36) of the connecting bore (25) for the suction-hose nipple (26) is located above the suction space (19) and/or the delivery space (20) of the pump (10).

7. Hydraulic pump according to Claim 3, characterized in that the suction-hose nipple (26) has a longitundinal bore (46) which is connected to the suction space (19) of the pump (10) by means of a transverse bore (47), in that the longitudinal bore (46) is connected to the delivery space (20) by means of a coaxially extending continuous overflow bore (54) of the plug (52), and in that a spring-loaded valve-closing member (ball 56) engages on that end of the overflow bore (54) which is located on the same side as the suction space.

## Revendications

1. Pompe hydraulique auto-amortiçante (10), notamment volumétrique, rotative ou alternative utilisée dans des installations de freinage de véhicules, comportant dans un boîtier (11) de pompe d'une part un alésage de raccordement (25) relié à la chambre d'aspiration (19) de la pompe et servant de logement étanche à un raccord (26) fileté pour tuyau flexible d'aspiration sur lequel est montée une canalisation d'aspiration (27), d'autre part un alésage (32) de raccordement à une conduite de pression relié lui-même par un canal (31) à la chambre de pression de la pompe, caractérisée en ce que le canal (31) qui se trouve également en liaison par l'alésage (25) du raccord fileté (26) avec la chambre de pression (20) de la pompe (10), est obturé de manière étanche par le raccord (26) monté dans l'alésage (25).

2. Pompe hydraulique selon la revendication 1, caractérisée en ce que le canal est constitué d'un alésage de liaison (31) de même axe , qui a pour axe longitudinal l'alésage de raccordement (25) recevant le raccord fileté (26) destiné au tuyau flexible d'aspiration et qui débouche dans l'alésage (32) de raccordement de la conduite de refoulement.

3. Pompe hydraulique selon la revendication 2, caractérisée en ce que le raccorod fileté (26) comporte un goujon (52) cylindrique de même axe qui s'introduit dans l'allésage de liaison (31) sous fermeture étanche.

4. Pompe hydraulique selon la revendication 3, caractérisée en ce que le goujon (52) du raccord (26) porte à sa périphérie une bague d'étanchéité (53).

5. Pompe hydraulique selon la revendication 1, caractérisée en ce que le raccord (26) comporte une rainure annulaire (43) dans laquelle est engagée une broche de sécurité, par exemple broche élastique (44) ou organe analogue, que l'on peut enfoncer dans le boîtier (11) de la pompe.

6. Pompe hydraulique selon la revendication 1, caractérisée en ce que l'embouchure (36) de l'alésage (25) servant de logement au raccord (26) est situé au-dessus de la chambre d'aspiration (19) et/ou de la chambre de pression (20) de la pompe (10).

7. Pompe hydraulique selon la revendication 3, caractérisée en ce que le raccord (26) présente un alésage longitudinal (46) lui-même relié par un alésage transversal (47) à la chambre d'aspiration (19) de la pompe (10) et par un alésage de trop-plein (54), coaxial et traversant le goujon (52), à la chambre de pression (20), l'extrémité, côté aspiration, du canal de trop-plein (54) étant en prise avec l'obturateur (bille 56) d'une soupape à rappel élastique.
